# EUROPÄISCHE PATENTSCHRIFT

(11) **EP 0 729 109 B1**
(45) Veröffentlichungstag und Bekanntmachung des Hinweises auf die Patenterteilung: **24.03.1999**
(21) Anmeldenummer: 95119824.1
(22) Anmeldetag: 15.12.1995
(51) Int. Cl.: G06K 7/06

(54) **Chipkartenleser**
Chip card reader
Lecteur de carte à puce

(30) Priorität: 24.02.1995 DE 19506606
(43) Veröffentlichungstag der Anmeldung: 28.08.1996
(73) Patentinhaber: AMPHENOL-TUCHEL ELECTRONICS GmbH, D-74080 Heilbronn (DE)
(72) Erfinder: Bleier, Robert, D-74206 Bad Wimpfen (DE)
(74) Vertreter: Becker, Thomas, Dr., Dipl.-Ing.

(56) Entgegenhaltungen:
- EP-A- 0 254 316
- EP-A- 0 459 584
- WO-A-94/06178
- WO-A-94/27243
- DE-A- 3 810 274
- FR-A- 2 607 287

## Beschreibung

Die Erfindung betrifft einen Chipkartenleser mit einem Gehäuse, einer im Gehäuse ausgebildeten Führungsbahn zur Aufnahme einer Chipkarte sowie einem gehäuseseitigen Kontaktträger, dessen Kontakte mit korrespondierenden Kontakten der Chipkarte in der Lesestelle der Chipkarte im Gehäuse kontaktierbar sind.

Chipkartenleser haben die Aufgabe, die Kontakte des auf der zugehörigen Karte angeordneten elektronischen Chips in einer bestimmten Endposition (Leseposition) der Karte im Leser zu kontaktieren, um so ein "Lesen" der Informationen des Chips, aber gegebenenfalls auch ein Eingeben von Informationen in die Chipkarte zu ermöglichen.

Chipkartenleser der genannten Art finden heute vielfältig Anwendung, zum Beispiel in sogenannten stationären Kartentelefonen, aber auch in Mobiltelefonen, Geldautomaten oder dergleichen.

Ein Chipkartenleser der genannten Art ist in der DE 38 10 275 A1 beschrieben.

Dieser Chipkartenleser weist einen mobilen Kontaktträger im Rahmen des Lesers auf, der parallel zur Einführung der Chipkarte gegen die Karte zur Kontaktierung geführt wird.

Die elektronische Verbindung der Kontakte des Chips mit den Kontakten des Kontaktträgers wird über einen Endlagenschalter erreicht, der nach Erreichen der Endposition der Chipkarte im Leser (Lesestellung) durch Auflaufen auf den Rahmen (das Gehäuse) betätigt wird.

Der bekannte Chipkartenleser hat sich technisch bewährt.

Ein Problem stellt jedoch ein zunehmender Vandalismus dar, bei dem Unbefugte versuchen, durch Einführen von Werkzeugen, zum Beispiel den Leser zu zerstören. Eine besonders empfindliche Stelle bilden dabei die Kontakte des Kontakträgers.

Dieses Problem stellt sich analog auch bei anderen Typen von Chipkartenlesern.

Der Erfindung liegt deshalb die Aufgabe zugrunde, einen Chipkartenleser der gattungsgemäßen Art anzubieten, der zusätzliche Sicherheitsmerkmale hinsichtlich eines unbefugten mechanischen Eingriffes aufweist.

Diese Aufgabe wird durch die im Anspruch 1 definierte Erfindung gelöst.

Dabei liegt der Erfindung die Erkenntnis zugrunde, daß dieses Ziel auf überraschend einfache Weise dadurch gelöst werden kann, daß die Kontakte des Kontaktträgers in einer Ausgangsstellung des Lesers durch ein Trennelement gegenüber der Führungsbahn für die Chipkarte abgeschottet sind.

Mit anderen Worten: Die Kontakte des Kontaktträgers werden durch das genannte Trennelement in der Ausgangsstellung des Lesers, in der sich keine Karte im Leser befindet, geschützt. Wird in diesem Fall ein Werkzeug, wie ein Messer, in die Führungsbahn des Gehäuses geführt, so können die Kontakte des Kontaktträgers mit dem Werkzeug nicht verletzt oder zerstört werden, weil das Trennelement vor den Kontakten angeordnet ist.

Es ist selbstverständlich, daß diese Zuordnung von Kontaktträger und Trennelement dann aufgehoben werden muß, wenn eine Chipkarte ordnungsgemäß in den Leser eingeführt wird.

Insoweit schließt sich an den vorgenannten Grundgedanken der Erfindung die weitere Überlegung an, den Chipkartenleser so zu gestalten, daß die "Schutzposition" des Trennelementes relativ zum Kontaktträger beim ordnungsgemäßen Einschieben einer Chipkarte auf geeignete Weise aufgehoben wird, um dann, in der Lesestellung der Chipkarte, die Kontakte der Chipkarte und des Kontaktträgers sicher miteinander zu kontaktieren.

Dementsprechend läßt sich der ergänzende Erfindungsgedanke allgemein dahingehend formulieren, daß beim Einführen der Chipkarte beziehungsweise spätestens beim Erreichen der Endposition der Chipkarte, das Trennelement oder der Kontaktträger soweit relativ zueinander verschoben sind, daß die Kontakte des Kontaktträgers den Kontakten der Chipkarte gegenüberliegen, also ohne zwischengeschaltetes Trennelement. Ferner ist als zusätzliche Maßnahme sicherzustellen, daß die durch das Trennelement bedingte "angehobene Stellung" des Kontaktträgers im Verhältnis zur Chipkarte spätestens in der Endposition der Chipkarte aufgehoben ist und die Kontakte der Chipkarte sicher gegen die Kontakte des Kontaktträgers anliegen.

Es ist selbstverständlich, daß in dieser Leseposition die elektronische Verbindung der gegenseiten Kontakte "freigeschaltet" sein muß, beispielsweise über den aus dem vorgenannten Stand der Technik bekannten Endlagenschalter. Ebenso selbstverständlich ist, daß die Karte in der Leseposition stationär festgehalten werden muß, wozu der Stand der Technik ebenfalls verschiedene Lösungsmöglichkeiten anbietet, die auf den erfindungsgemäßen Chipkartenleser ohne weiteres anwendbar sind, jedoch unabhängig von den erfindungsgemäß im Vordergrund stehenden Merkmalen zur mechanischen Sicherung des Lesers.

Konkret schlägt die Erfindung dazu insgesamt vier Ausführungsformen vor, denen sämtlich der gleiche Erfindungsgedanke zugrundeliegt.

Nach einer ersten Ausführungsform ist der Kontaktträger so gestaltet, daß er beim Einschieben der Chipkarte relativ zum Trennelement von diesem weg und der Kontaktträger beziehungsweise dessen Kontakte gegen die Kontakte der Chipkarte bewegbar sind.

Bei dieser Ausführungsform ist das Trennelement demnach stationär. In der Ausgangsstellung des Lesers befindet sich der Kontaktträger "hinter" dem Trennelement (bezogen auf die Führungsbahn) und erst beim Einschieben der Chipkarte wird der Kontaktträger von diesem schützenden Trennelement seitlich wegbewegt und anschließend gegen die Chipkarte geführt.

Gemäß der zweiten Ausführungsform ist der Kontaktträger so gestaltet, daß er beim Einschieben der Chipkarte relativ zum Trennelement von diesem wegbewegt wird und die Chipkarte beziehungsweise deren Kontakte auf ihrem weiteren Weg in die Lesestellung der Chipkarte entlang der Führungsbahn gegen die Kontakte des Kontaktträgers bewegbar sind.

Hierbei entspricht die relative Bewegung von Kontaktträger und Trennelement der der ersten Ausführungsform. Im Gegensatz zur ersten Ausführungsform wird jetzt jedoch die Chipkarte in Richtung auf den Kontaktträger bewegt, um die gewünschte Kontaktierung sicherzustellen. Entsprechende Führungen entlang der Führungsbahn dienen der Bewegung der Chipkarte gegen den Kontaktträger.

Die dritte Ausführungsform ist durch folgende Merkmale gekennzeichnet: Das Trennelement ist beim Einschieben der Chipkarte in die Führungsbahn relativ zum Kontaktträger von diesem weg bewegbar und der Kontaktträger beziehungsweise dessen Kontakte werden auf dem weiteren Weg der Chipkarte in die Lesestellung gegen die Kontakte der Chipkarte geführt.

Im Gegensatz zu den beiden erstgenannten Ausführungsformen ist die Position des Kontaktträgers, relativ zum Trennelement betrachtet, hier "stationär". Um gleichwohl die Kontakte des Kontaktträgers freizulegen, wird das Trennelement relativ zum Kontaktträger beim Einschieben der Chipkarte weggeführt. Um den durch das Trennelement bedingten "Abstand" zwischen den Kontakten des Kontaktträgers und den Kontakten der Chipkarte zu überwinden, sieht ein weiteres Merkmal vor, den Kontaktträger nun beim weiteren Einschieben der Chipkarte in Richtung auf die Chipkarte und gegen diese zu führen. Bezüglich des Kontaktträgers erfolgt also lediglich eine Bewegung im wesentlichen senkrecht zur Chipkarte. "Im wesentlichen senkrecht" bedeutet, daß die Führungsbahn für den Kontaktträger auch zum Beispiel evolventenartig sein kann, da es letztendlich nur darauf ankommt, in der Lesestellung eine sichere Kontaktierung zwischen Chipkarte und Kontaktträger zu erreichen.

Die vierte Ausführungsform unterscheidet sich von der dritten Ausführungsform dadurch, daß die Chipkarte - nach Lösen des Kontaktträgers vom Trennelement - gegen den Kontaktträger beziehungsweise dessen Kontakte geführt ("angehoben") wird. Ansonsten gilt auch hier, daß die konstruktive Gestaltung derart ist, daß das Trennelement beim Einschieben der Chipkarte in die Führungsbahn relativ zum Kontaktträger von diesem weg und diese damit "freigelegt" wird.

Die erfindungsgemäße Gestaltung eines Chipkartenlesers stellt mit einfachen Mitteln einen sicheren Schutz gegen Vandalismus zur Verfügung, wobei die weiteren Merkmale eines Chipkartenlesers gegenüber dem Stand der Technik unverändert bleiben können, beispielsweise Mittel zum Festhalten der Karte in der Leseposition beziehungsweise Kontaktierung der Kontakte über einen Endlagenschalter.

Hinsichtlich der Führung von Kontaktträger beziehungsweise Trennelement stehen dem Fachmann zahlreiche Ausführungsformen zur Verfügung. Dabei kann - auf die in anderem Zusammenhang bekannte - "Schlittentechnik" zurückgegriffen werden. So sieht eine Ausführungsform der Erfindung vor, daß der Kontaktträger auf einem in und gegen die Einschubrichtung der Chipkarte verfahrbaren Schlitten angeordnet ist, der aus einer auf dem oder im Boden der Führungsbahn gleitbaren Platte und einem gelenkig an der Platte angeschlossenen Aufnahmeteil für den Kontaktträger besteht, wobei der Aufnahmeteil in mindestens einer gehäuseseitigen, in Einschubrichtung der Chipkarte nach unten (in Richtung auf die Chipkarte) geneigten Nut geführt ist.

Um eine sichere Zuführung der Chipkarte in die Führungsbahn sicherzustellen, ist die genannte Platte vorzugsweise im Boden der Führungsbahn versenkt und mit diesem fluchtend. Auf diese Weise kann die Chipkarte problemfrei in die Führungsbahn eingeführt werden und bewirkt nach Erreichen eines nachstehend noch näher beschriebenen Anschlages die Mitnahme des Schlittens und parallel dazu die Trennung des Kontaktträgers vom Trennelement sowie die Absenkung des Kontaktträgers entlang einer entsprechenden "schiefen Ebene", bis zur endgültigen Kontaktposition auf den Kontakten der Chipkarte.

Um die Mitnahme des Schlittens durch die Chipkarte sicherzustellen, kann die Platte nach einer weiteren Ausführungsform an ihrem in Einschubrichtung der Chipkarte hinteren Ende einen Anschlag für die Chipkarte aufweisen. Dieser ist vorzugsweise - in Einschubrichtung der Karte betrachtet - sehr schmal ausgebildet, um insoweit ein unbefugtes Wegdrücken mittels eines Werkzeuges zu erschweren oder unmöglich zu machen.

Um den Kontaktträger beziehungsweise den Schlitten nach Entnahme der Chipkarte wieder in der "Schutzposition" vor dem Trennelement zu haben, sind weitere Maßnahmen erforderlich, um die Rückführung des Kontaktträgers beziehungsweise Schlittens in die Ausgangsposition sicherzustellen.

Dies kann einerseits über entsprechende Klemmeinrichtungen oder Haken zwischen Chipkarte und Kontaktträger (Schlitten) erfolgen. Im einfachsten Fall wird der Schlitten jedoch entgegen der Einschubrichtung der Chipkarte unter Zugspannung gelagert, wobei die Zugspannung zum Beispiel mit Hilfe einer Zugfeder zur Verfügung gestellt werden kann und die Zugfeder mit einem Ende am Kontaktträger (Schlitten) und mit dem anderen Ende am Gehäuse befestigbar ist.

Weitere Merkmale der Erfindung finden sich in den Merkmalen der Unteransprüche sowie den sonstigen Anmeldungsunterlagen. Hierzu gehört auch die nachfolgende Figurenbeschreibung, die insoweit auch alleingültige Merkmale der Erfindung enthält.

Dabei zeigen - jeweils in schematisierter Darstellung -
- Figur 1:: ein Gehäuse für einen Chipkartenleser,
- Figur 2:: einen Schlitten mit Kontaktträger zur Führung im Gehäuse gemäß Figur 1,
- Figur 3:: das mit dem Schlitten nach Figur 2 konfektionierte Gehäuse gemäß Figur 1.

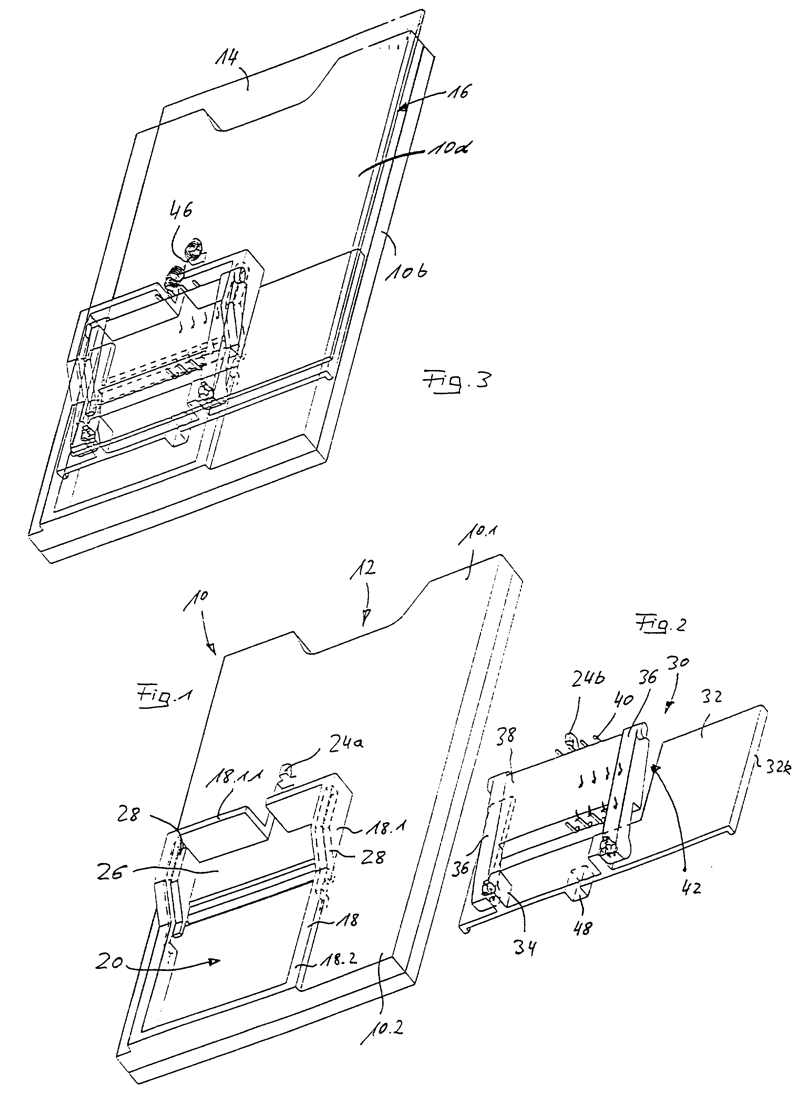

Das Gehäuse 10 nach Figur 1 weist im wesentlichen eine äußere Quaderform auf und ist an seinem einen Ende 10.1 "offen" und mit einer Einstecköffnung 12 für eine Chipkarte 14 ausgebildet, wobei sich an die Einstecköffnung 12 in Richtung auf das andere Ende 10.2 des Gehäuses 10 eine Führungsbahn 16 zur im wesentlichen spielfreien Aufnahme der Chipkarte 14 anschließt. Entsprechend ist die Breite der Führungsbahn 16 gleich oder geringfügig größer als die Breite der Chipkarte 14 und die Höhe der Führungsbahn 16 gleich oder geringfügig größer als die Dicke der Chipkarte 14.

Im Bereich des Endes 10.2 ist das Gehäuse 10 nach oben offen (Öffnung 20) und ein Rahmen 18 steht umfangsseitig über den Deckel 10d des Gehäuses 10 vor und ist in Richtung auf das Ende 10.1 verlängert, wobei dieser Rahmenteil 18.1 eine größere Höhe aufweist als der Rahmenteil 18.2 im Bereich der Öffnung 20.

Der in Richtung auf das erste Ende 10.1 querverlaufende Rahmenabschnitt 18.1.1 ist mittig durchbrochen und hinter der Öffnung 22 ist mit Abstand ein Lagerhaken 24a auf dem Gehäusedeckel 10d angeordnet. Wie insbesondere Figur 1 zeigt, umgreift der Rahmenabschnitt 18.1 einen der Öffnung 20 benachbarten Deckelteil 26, der nachstehend als Trennelement bezeichnet wird. Das Trennelement ist von der Rahmenwand 18.1.1 zur Öffnung 20 hin geneigt ausgebildet.

Auf den Innenseiten der seitlichen Rahmenteile 18.1 verlaufen, ausgehend von der Öffnung 20, Nuten 28, und zwar, entsprechend der Art der Rahmenabschnitte 18.1 von der Öffnung 20 zur hinteren Rahmenwand 18.1.1 zunächst ansteigend und dann im wesentlichen parallel zur Oberfläche des Trennelementes 26.

Figur 2 zeigt einen Schlitten, der ingesamt das Bezugszeichen 30 trägt und aus einer Platte 32 besteht, die, wie Figur 3 zeigt, in einer korrespondierenden Vertiefung des Gehäusebodens 10b verläuft und über seitlich abgewinkelte Kanten 32k sicher in Längsrichtung des Gehäuses (zwischen den Enden 10.1 und 10.2) gleitbar ist.

Von der Platte 32 erstrecken sich im Bereich der Öffnung 20 Lagerzapfen 34 senkrecht nach oben, an denen Arme 36 drehbar angelenkt sind, die zwischen sich einen Kontaktträger 38 aufnehmen, der unterseitig Kontakte 40 aufweist. Unterhalb des Kontaktträgers 38 ist die Platte 32 mit einer korrespondierenden Ausnehmung 42 ausgebildet.

Figur 3 zeigt das Gehäuse 10 und den Schlitten 30 nach den Figuren 1 und 2 im zusammengebauten (konfektionierten) Zustand. Danach erstrecken sich die Lagerzapfen 34 und die Arme 36 sowie der Kontaktträger 38 durch die Öffnung 20 über das Trennelement 26, wobei der Kontaktträger 38 über die seitlichen Arme 36 in den Nuten 28 des Rahmens 18 geführt wird. Ein Haken 24b im Bereich der vorderen Stirnfläche des Kontaktträgers 38 dient zur Aufnahme einer Zugfeder 46, deren anderes Ende am Haken 24a auf dem Gehäusedeckel 10d befestigt ist. Auf diese Weise wird der Schlitten 30 in der in Figur 3 dargestellten Position gehalten, wobei sich eine Führung durch die Arme 36 in den Nuten 28 und über die abgewinkelten Kanten 32k der Platte 32 in der Führungsbahn 16 ergibt.

Wie insbesondere Figur 1 zeigt, sind die Kontakte 40 des Kontaktträgers 38 gegenüber der Führungsbahn 16 durch das zwischengeschaltete Trennelement 26 geschützt. Wird also beispielsweise mit einem Werkzeug in die Führungsbahn 16 eingegriffen, so kann dies nicht zu einer Verletzung der Kontakte 40 führen.

Wird aber ordnungsgemäß eine Chipkarte 14 in die Führungsbahn 16 geführt, so ergibt sich folgendes:

Die Chipkarte 14 stößt mit ihrem vorderen Ende gegen einen Anschlag 48 und bewirkt, daß der Schlitten 30 gegen die Kraft der Zugfeder 46 in Richtung auf das Gehäuseende 10.2 vorbewegt wird. Parallel mit dieser Bewegung wird der Kontaktträger 38 entlang der Nuten 28 ebenfalls in Richtung auf das Gehäuseende 10.2 geführt und dabei relativ zum Trennelement 26 bewegt und von diesem gelöst. Aufgrund der geneigten Ausbildung der Nuten 28 wird der Kontaktträger 38 gleichzeitig nach unten in Richtung auf die Chipkarte 14, abgesenkt, und zwar soweit, daß in der (hier nicht dargestellten) Endposition der Chipkarte 14 die Kontakte 40 des Kontaktträgers 38 entsprechende Kontakte auf der Chipkarte 14 kontaktieren, wobei gleichzeitig über einen (hier ebenfalls nicht dargestellten) Endlagenschalter die elektronische Verbindung zwischen den gegenseitigen Kontakten ausgelöst wird.

Wird die Chipkarte 14 wieder entnommen, bewegt sich der Schlitten 30 in die in Figur 3 dargestellte Position automatisch zurück, und zwar aufgrund der Wirkung der Zugfeder 46.

## Patentansprüche

1. Chipkartenleser mit einem Gehäuse (10), einer im Gehäuse (10) ausgebildeten Führungsbahn (16) zur Aufnahme einer Chipkarte (14) sowie einem gehäuseseitigen Kontaktträger (38), dessen Kontakte (40) mit korrespondierenden Kontakten der Chipkarte (14) in der Lesestellung der Chipkarte (14) im Gehäuse (10) kontaktierbar sind,
dadurch gekennzeichnet, daß
die Kontakte (40) des Kontaktträgers (38) in einer Ausgangsstellung des Lesers durch ein Trennelement (26) gegenüber der Führungsbahn (16) abgeschottet sind, und
- der Kontaktträger (38) beim Einschieben der Chipkarte (14) relativ zum Trennelement (26) von diesem weg und der Kontaktträger (38) beziehungsweise dessen Kontakte (40) auf dem weiteren Weg der Chipkarte (14) in die Lesestellung gegen die Kontakte der Chipkarte bewegbar, oder
- der Kontaktträger beim Einschieben der Chipkarte relativ zum Trennelement von diesem weg und die Chipkarte beziehungsweise deren Kontakte auf ihrem weiteren Weg in die Lesestellung der Chipkarte entlang der Führungsbahn gegen die Kontakte des Kontaktträgers bewegbar, oder
- das Trennelement beim Einschieben der Chipkarte in die Führungsbahn relativ zum Kontaktträger von diesem weg und der Kontaktträger beziehungsweise dessen Kontakte auf dem weiteren Weg der Chipkarte in die Lesestellung gegen die Kontakte der Chipkarte bewegbar, oder
- das Trennelement beim Einschieben der Chipkarte in die Führungsbahn relativ zum Kontaktträger von diesem weg und die Chipkarte beziehungsweise deren Kontakte auf ihrem weiteren Weg in die Lesestellung der Chipkarte entlang der Führungsbahn gegen die Kontakte des Kontaktträgers bewegbar sind.

2. Chipkartenleser nach Anspruch 1, bei dem der Kontaktträger (38) auf einem in und gegen die Einschubrichtung der Chipkarte (14) verfahrbaren Schlitten (30) angeordnet ist, der aus einer auf dem oder im Boden (10b) der Führungsbahn (16) gleitbaren Platte (32) und einem gelenkig an der Platte (32) angeschlossenen Aufnahmeteil (36) für den Kontaktträger (38) besteht, wobei der Aufnahmeteil (36) in mindestens einer gehäuseseitigen, in Einschubrichtung der Chipkarte (14) nach unten (in Richtung auf die Chipkarte (14)) geneigten Nut (28) geführt ist.

3. Chipkartenleser nach Anspruch 2, bei dem die Platte (32) des Schlittens (30) an ihrem in Einschubrichtung der Chipkarte (14) hinteren Ende einen Anschlag (48) für die Chipkarte (14) aufweist.

4. Chipkartenleser nach Anspruch 2 oder 3, bei dem der Schlitten (30) entgegen der Einschubrichtung der Chipkarte (14) unter Zugspannung gehalten wird.

5. Chipkartenleser nach Anspruch 4, bei dem der Schlitten (30) über eine Zugfeder (46) am Gehäuse (10) befestigt ist.

## Claims

1. A chip card reader comprising a housing (10), a guide track (16) within the housing (10) for receiving a chip card (14) and a contact carrier (38) which contacts (40) make contact in the housing (10) with corresponding contacts on said chip card (14) when the chip card (14) is inserted in the read position, characterized in that the contacts (40) of the contact carrier (38) are protected in a non-use position of said chip card reader by a separating element (26) as against the guide track (16) and
the contact carrier (38) will move relative to the separating element (26) when the chip card (14) is inserted and the contact carrier (38) or its contacts (40), respectively, are movable against the contacts of the chip card along the guide track in the read position or
the contact carrier will move relative to the separating element when the chip card is inserted and the chip card or its contacts, respectively, are movable against the contacts of the contact carrier as the chip card moves along the guide track into the read position, or
the separating element is movable relative to the contact carrier when the chip card is inserted into the guiding track and the contact carrier or its contacts, respectively, are moveable into contact with the contacts of the chip card on its way into the read position, or
the separating element is movable relative to the contact carrier when the chip card is inserted into the guiding track and the chip card or its contacts, respectively, are movable into contact with the contacts of the contact carrier on ist way into the read position.

2. The chip card reader according to claim 1, wherein the contact carrier (38) is arranged on a sled (30) which is drivable in and against the direction of insertion of the chip card (14), said sled (30) comprising a plate (32) which is slidable on or in the floor (10b) of the guide track (16) and a receiving part (36) for the contact carrier (38) connected in a flexible manner to the plate (32), whereby the receiving part (36) is guided in at least one groove (28), provided within said housing and inclined downwardly with respect to the feeding direction of said chip card (14).

3. The chip card reader according to claim 2, further comprising a buffer (48) for the chip card (14) provided on the rear end of the plate (32) of the sled (30) in the direction of insertion of the chip card (14).

4. The chip card reader according to claim 2 or 3, wherein the sled (30) is held under tension opposite to the direction of insertion of the chip card (14).

5. The chip card reader according to claim 4, wherein the sled (30) is attached to the housing (10) via a driving spring (46).

## Revendications

1. Lecteur de carte à puce comprenant un boîtier (10), une glissière de guidage (16) réalisée dans le boîtier (10) et destinée à recevoir une carte à puce (14), ainsi qu'un porte-contacts (38) sur le côté du boîtier, dont les contacts (40) peuvent entrer en contact avec les contacts correspondants de la carte à puce (14) dans la position de lecture de la carte (14) dans le boîtier (10), caractérisé en ce que
les contacts (40) du porte-contacts (38), dans une position initiale du lecteur, sont protégés face à la glissière de guidage (16) par un élément de séparation (26), et
- au moment de l'insertion de la carte à puce (14), le porte-contacts (38) s'écarte de l'élément de séparation (26) et, pendant le déplacement de la carte à puce (14) vers la position de lecture, le porte-contacts (38), plus précisément ses contacts (40), se déplace contre les contacts de la carte à puce, ou
- au moment de l'insertion de la carte à puce, le porte-contacts s'écarte de l'élément de séparation et, pendant le déplacement de la carte à puce vers la position de lecture, la carte à puce, plus précisément ses contacts, se déplace le long de la glissière de guidage contre les contacts du porte-contacts, ou
- au moment de l'insertion de la carte à puce dans la glissière de guidage, l'élément de séparation s'écarte du porte-contacts et, pendant le déplacement de la carte à puce vers la position de lecture, le porte-contacts, plus précisément ses contacts, se déplace contre les contacts de la carte à puce, ou
- au moment de l'insertion de la carte à puce dans la glissière de guidage, l'élément de séparation s'écarte du porte-contacts et la carte à puce, plus précisément ses contacts, pendant son déplacement vers la position de lecture de la carte à puce, se déplace le long de la glissière de guidage contre les contacts du porte-contacts.

2. Lecteur de carte à puce selon la revendication 1, dans lequel le porte-contacts (38) est disposé sur un chariot (30), susceptible de se déplacer dans le même sens et dans le sens contraire au sens d'insertion de la carte à puce (14), ce chariot étant formé par une plaque (32), qui peut glisser dans ou sur le fond (10b) de la glissière de guidage (16), et par un élément de réception (36) assemblé de manière articulée à la plaque (32) et destiné au porte-contacts (38), l'élément de réception (36) étant guidé dans au moins une rainure (28) réalisée sur le côté du boîtier et inclinée (en direction de la carte à puce (14)) vers le bas, dans le sens d'insertion de la carte à puce (14).

3. Lecteur de carte à puce selon la revendication 2, dans lequel la plaque (32) du chariot (30) est munie d'une butée (48) pour la carte à puce (14), réalisée sur son extrémité arrière dans le sens d'insertion de la carte à puce (14).

4. Lecteur de carte à puce selon la revendication 2 ou 3, dans lequel le chariot (30) est maintenu sous l'effet d'une contrainte de traction en sens inverse du sens d'insertion de la carte à puce (14).

5. Lecteur de carte à puce selon la revendication 4, dans lequel le chariot (30) est bloqué contre le boîtier (10) par un ressort de traction (46).
